# EUROPEAN PATENT APPLICATION

(11) **EP 1 837 736 A2**
(43) Date of publication of application: **26.09.2007**
(21) Application number: 06125125.2
(22) Date of filing: 30.11.2006
(51) Int. Cl.: G06F 3/01

(54) **Display control apparatus**

(30) Priority: 24.03.2006 CN 200610066168
(71) Applicant: High Tech Computer Corp., Taoyuan City (TW)
(72) Inventor: Hsu, Chih-Feng, TAOYUAN CITY (TW); Kao, Yih-Feng, TAOYUAN CITY (TW); Wu, Kuo-Chen, TAOYUAN CITY (TW); Huang, Ming-San, TAOYUAN CITY (TW); Wang, John C., TAOYUAN CITY (TW)
(74) Representative: Viering, Jentschura & Partner

(57) **Abstract**

The display control apparatus installed in an electronic device includes a motion sensor, a processor and a display controller. The motion sensor senses the motion of an electronic device and sends out a motion parameter to a processor. Each motion parameter is related to a specific page motion. Therefore, when the processor receives a motion parameter, a corresponding display instruction is triggered and sent to the display controller to control the page motion to display a corresponding display page.

## Description

### Field of the Invention

The present invention relates to a method and apparatus for controlling a display, and more particularly to a method and apparatus for controlling a display by device's tilting.

### Background of the Invention

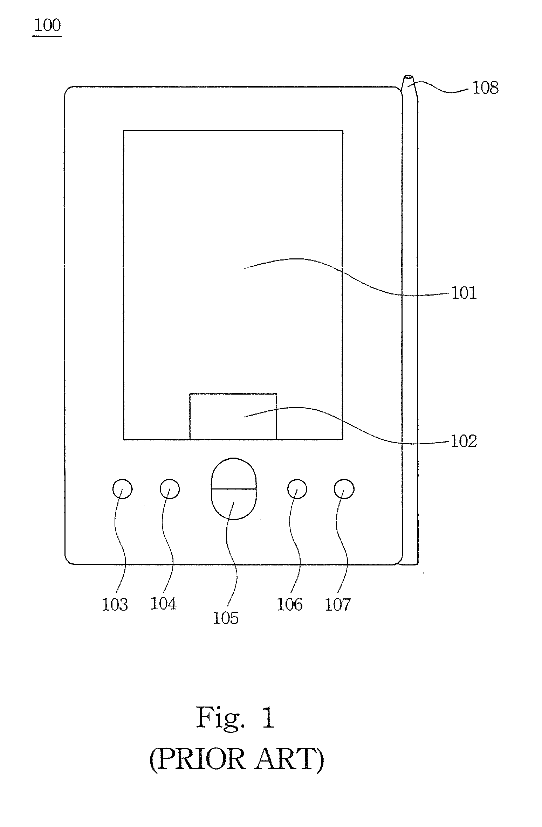

Figure 1 is a schematic diagram of a typical electronic device. The electronic device 100 includes a display 101, a handwriting region 102, control buttons 103, 104, 105, 106 and 107 and a stylus 108. A user may control the electronic device to process a special function or input special information by using the stylus 108 to input or pushing the corresponding buttons.

However, when more and more functions are built in the electronic device 100, additional control buttons are required to control these functions. In other words, it is necessary to reserve additional space in the electronic device to install these buttons.

Moreover, a stylus may be used to replace these buttons to be as an input apparatus. However, a user has to hold the stylus in one hand and hold the electronic device in the other hand. When using the stylus to input information or control the display, the user has to keep a close watch on the display. Such a control method is not convenient for a user.

Therefore, a new control apparatus and control method is required.

### Summary of the Invention

The main purpose of the present invention is to provide a display control apparatus to change the display page by tilting the electronic device.

The purpose of the present invention is to provide a display control apparatus to change the display page by rotating the electronic device.

According to the foregoing purposes, the present invention provides a display control apparatus installed in an electronic device. The display control apparatus includes a motion sensor, a processor and a display controller. The motion sensor senses the motion of an electronic device and sends out a motion parameter to a processor. Each motion parameter is related to a special page motion. Therefore, when the processor receives a motion parameter, a corresponding display instruction is triggered and sent to the display controller to control the page motion to display a corresponding display page

According to another embodiment, the present invention provides a display control method. The display control method includes a sensor to sense the motion of an electronic device and sends out a motion parameter, to receive the motion parameter to trigger a corresponding display instruction and to display a corresponding display page based on the display instruction. Each motion parameter is related to a special page motion.

According to one embodiment, the method further comprises modifying the relationships between the motion parameter and the display instruction through a user interface.

### Brief Description of the Drawings

The foregoing aspects and many of the attendant advantages of this invention are more readily appreciated and better understood by referencing the following detailed description, when taken in conjunction with the accompanying drawings, wherein:
Figure 1 is a schematic diagram of an electronic device.
Figure 2 illustrates a schematic diagram of a display controller according to a preferred embodiment.
Figure 3 illustrates a portable electronic device 300 having 320*240 pixels.
Figure 4A and figure 4B illustrate the relationship between the display page and the whole page.
Figure 5 illustrates a flow chart for controlling the display according to an embodiment of the present invention.

### Detailed Description of the Preferred Embodiment

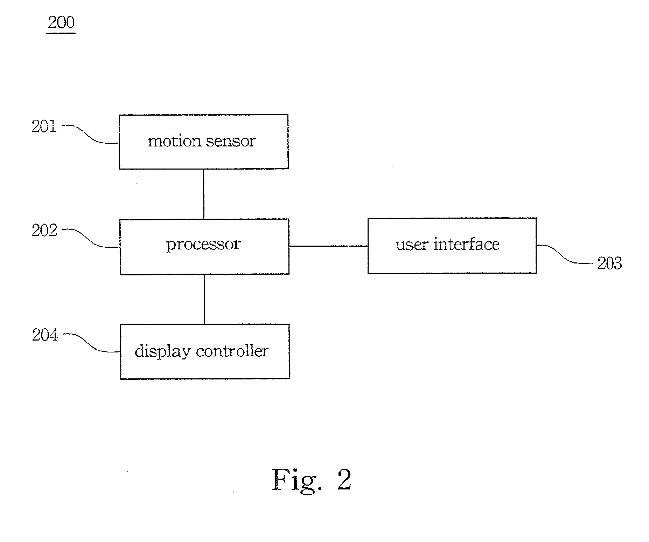

Figure 2 illustrates a schematic diagram of a display controller according to a preferred embodiment. The display control apparatus 200 is embedded in a portable electronic devie, such as a mobile phone, a personal digital assistants (PDA), a notebook and so on.

The display control apparatus 200 of the present invention includes a motion sensor 201, a processor 202 and a display controller 204. The motion sensor 201 is, for example, a 2-axle accelerator, a 3-axle accelerator, an inclinometer or a compass sensor. The motion sensor 201 senses the motion or tilt of the portable electronic device and outputs a motion parameter. The processor 202 is coupled with the motion sensor 201. A display instruction may be stored in the processor 202. The relationship between the display instruction and the motion parameter may be pre-programmed in the processor 202 or pre-defined by the user through the user interface 203. Each motion parameter is related to a special page motion. Therefore, when the processor 202 receives a motion parameter sent out from the motion sensor 201 to trigger a display instruction to perform a corresponding page motion, this display instruction is sent to the display controller 204 to performe a corresponding display in the display. Firmware or software may be used to implement the function of the processor 202 to process the motion parameter to trigger a corresponding display instruction.

Moreover, the display control apparatus 200 further includes a user interface 203 coupled with the processor 202. The display instruction sent out from the processor 202 may be interrupted by a user through the user interface 203 to fix a special picture in the display. Or, the corresponding relationship of the display instruction to the motion parameter may be changed by the user through the user interface 203. On the other hand, the processor 202 and the display controller 204 may be integrated together. That is after a motion parameter is received, the step of triggering a corresponding display instruction and the step of controlling the display to show a special picture in the display may be performed together.

An embodiment to generate a motion parameter is described in the following paragraph. In this embodiment, the motion sensor 201 is a 2-axle accelerator for detecting the motion parameter of the portable elctrical device. Please refer to the figure 2. When a user rotates the portable electronic device to cause the motion sensor 201 embedded in the electronic device to have an inclination, a special motion parameter related to the inclination is generated and sent to the processor 202. The motion parameter is changeable based on the inclination between the motion sensor and the X-axis (or the Y-axis). Typically, the motion parameter is a sine value of the inclination. After the motion parameter is sent to the processor 202, the motion parameter is transformmed to a corresponding angle of the electricel device to the X-axis (or the Y-axis) by the processor 202. Based on the angle, a corresponding display instruction is sent out to control the page motion is the display.

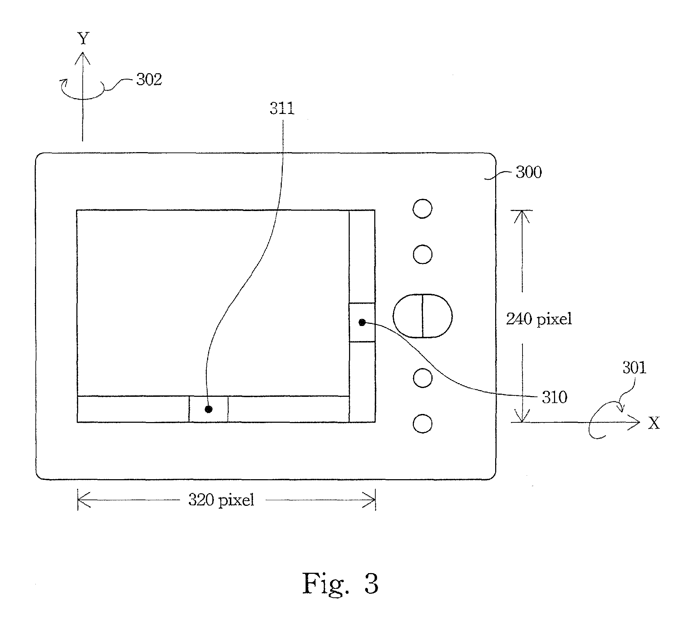

Figure 3 illustrates a portable electronic device 300 with a 320*240 pixel display. According to the embodiment, the initial location of the electronic device 300 is parallel to the page. When the electronic device 300 is tilted and has a 60 degree inclination towards the Y-axis or a 16 degrees inclination toward to the X-axis, a display instruction to change the whole display image is defined. According to this embodiment, a one degree change between the electronic device 300 and the Y-axis may cause the display page to move four pixels (240 pixels divided by 60 degrees) along the Y-axis. In this case, the user may use the user interface to define the direction of motion of the thumb 311 (the wiper of scrollbar) in the direction of either the positive Y-axis or the negative Y-axis. Similarly, one degree change between the electronic device 300 and the X-axis causes the display page to move twenty pixels (320 pixels divided by 16 degrees) along the X-axis. In this case, the user may use the user interface to define the direction of motion of the thumb 311 in the direction of either the positive X-axis or the negative X-axis. Accordingly, when the electronic device 300 is rotated and has an inclination in the direction of the Y-axis or the X-axis respectively, the display page is moved in an oblique direction.

In an embodiment, a user through the user interface 203 defines that when the electronic device 300 is rotated clockwise around the X-axis, indicated by the arrow 301, the included angle between the electronic device 300 and the Y-axis is increased and the thumb 310 is moved toward the negative Y-axis direction to display the downside page. Moreover, the user through the user interface 203 also defines that when the electronic device 300 is rotated clockwise around the Y-axis, indicated by the arrow 302, the included angle between the electronic device 300 and the X-axis is increased and the thumb 311 is moved toward the positive X-axis direction to display the rightside page.

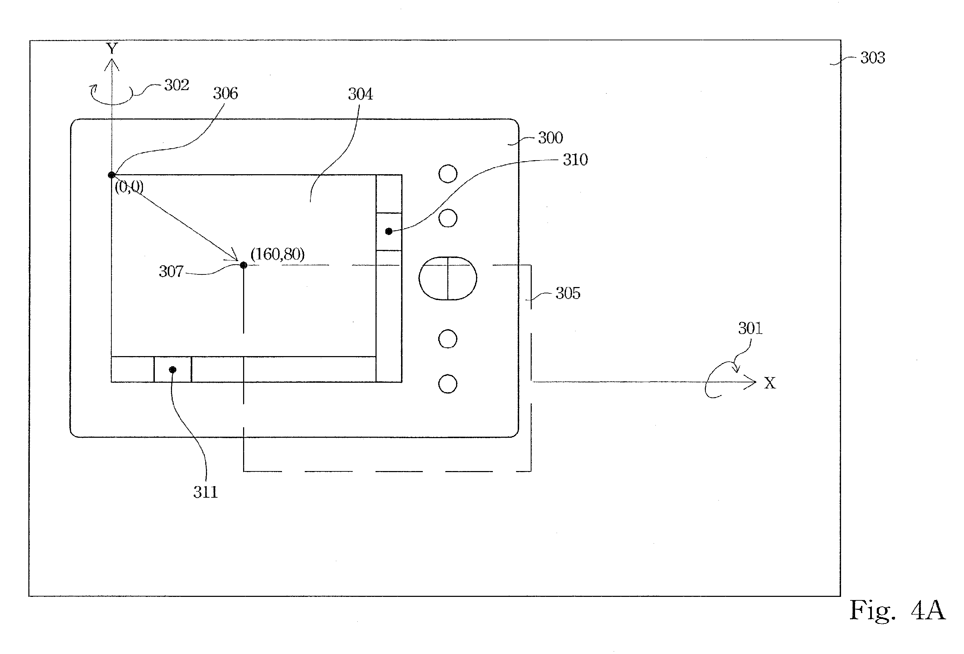

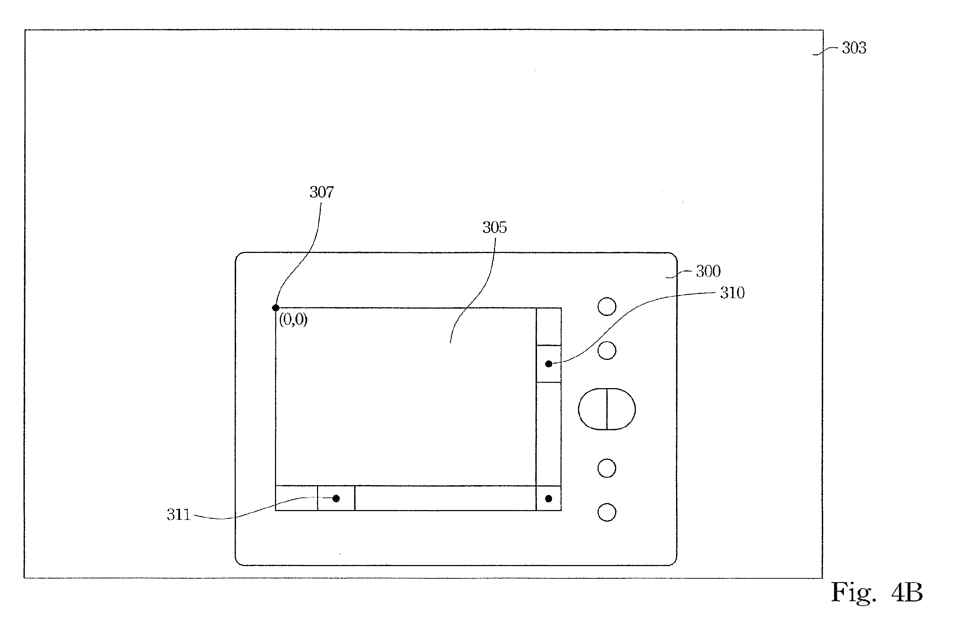

Please refer to the figure 4A and figure 2. The page 303 drawn by the solid line is the complete browsing area. The display in the electronic device 300 only can show a part of the page 303. Therefore, when a user wants to see another part of the page 303, for example, the user must change the display page from the display page 304 to the display page 305, the user may rotate or tilt the electronic device 300 to change the included angle between the electronic device 300 and the Y-axis or the X-axis. According to this embodiment, the included angle between the electronic device 300 and the Y-axis has a change of 20 degrees and the included angle between the electronic device 300 and the X-axis has a change of 8 degrees change. In this case, the motion sensor 201 in the electronic device 300 detects the change of the included angle. Then, motion parameters, sine values of the included angles, are sent out to the processor 202. The processor 202 may transform these sine values to angles and send out a display instruction based on these angles. In this embodiment, the 20 degrees change between the electronic device 300 and the Y-axis may control the thumb 310 toward the negative Y-axis direction to move 80 pixels. Therefore, the page 303 is controlled toward the positive Y-axis direction to move 80 pixels to display the downside page. On the other hand, the 8 degree change between the electronic device 300 and the X-axis may move the thumb 311 160 pixels towards the positive X-axis. Therefore, the page 303 is moved 80 pixels towards the negative X-axis to display the rightside page. In this case, the location of the display page origin is moved from the location 306 to the location 307. The point (160, 80) shown in figure 4B is the result of the origin point after moving the page. Therefore, the display page of the electronic device 300 is changed from the display page 304 to the display page 305 as shown in figure 4B. Accordingly, the location 307 is the new origin of the display page 305.

It is noticed that a user may control the processor 202 to interrupt the the display instruction output to fix the display page through the user interface 203. On the other hand, the motion sensor 201 detects the point of origin to ensure the electronic device 300 may displays the exact display page based on the angle change of the electronic device 300. Moreover the user interface 203 may change the relationship between the rotation angle of the electronic device and the motion of the page displayed by the electronic device to fit the user requirements. On the other hand, the rotation angle of the electronic device is transformed to the sine values of angle. Therefore, when the electronic device is rotated to 180 degrees, the direction of the page motion is opposite to the original setting. Therefore, the user may renew the setting through the user interface 203.

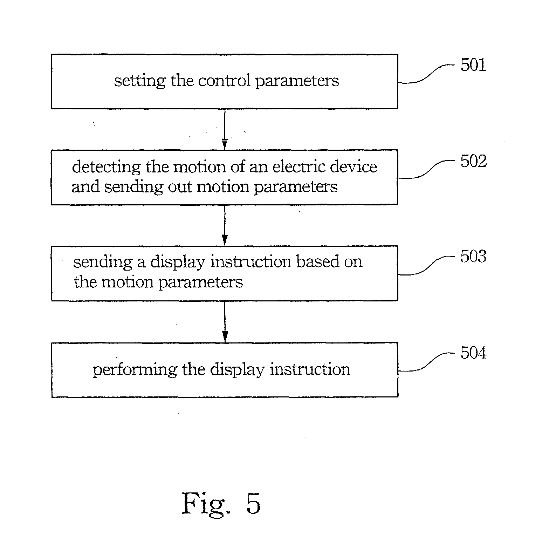

Figure 5 illustrates a flow chart for controlling the display according to an embodiment of the present invention. Please refer to the figure 5 and figure 2. In the step 501, a user may set the control parameters through the user interface 203. For example, this user may set the relationship between the rotation angle of the electronic device and the distance of the page motion or the direction of the page motion. It is noticed that this step is an optional step. In other words, in other embodiments, the above parameters may be stored directly in the display control apparatus 200. Next, in the step 502, The motion sensor 201 senses the motion of the electronic device and sends out a motion parameter. In the step 503, the processor 202 receives the motion parameter and transforms this parameter into an angle. Based on the angle, a corresponding display instruction is triggered. Finally, in step 504, this display instruction is sent to the display controller 204. The controller may control the electronic device to perform a corresponding page motion based on the display instruction.

Accordingly, the display control apparatus of the present invention includes a motion sensor, a processor and a display controller. The motion sensor senses the motion or tilt of an electronic device and sends out a motion parameter to a processor. Each motion parameter is related to a special page motion. Therefore, when the processor receives a motion parameter, a corresponding display instruction is triggered. This display instruction is sent to the display controller to control the page motion to display a corresponding display page.

Accordingly, no additional control button is installed in the electronic device, which does not affect the size of the electronic device. Moreover, a user may set the relationship between the rotation angle of electronic device and the page motion based on his requirement.

As is understood by a person skilled in the art, the foregoing descriptions of the preferred embodiment of the present invention are an illustration of the present invention rather than a limitation thereof. Various modifications and similar arrangements are included within the spirit and scope of the appended claims. The scope of the claims should be accorded to the broadest interpretation so as to encompass all such modifications and similar structures. While a preferred embodiment of the invention has been illustrated and described, it will be appreciated that various changes can be made therein without departing from the spirit and scope of the invention.

## Claims

1. A display control apparatus installed in an electronic device to change the display page, the apparatus comprising:
a motion sensor for detecting motion of the electronic device to send at least one motion parameter;
a processor for receiving the motion parameter, determining a motion direction and a motion distance based on the motion parameter and sending out a display instruction; and
a display controller for receiving the display instruction to move the display page to a specific location based on the motion direction and the motion distance.

2. The display control apparatus of claim 1, wherein the motion sensor is a 2-axle accelerator, a 3-axle accelerator, an inclinometer or a compass sensor.

3. The display control apparatus of claim 1, further comprising a user interface to define the relationship between the motion parameter and the motion direction and the relationship between the motion parameter and the motion distance.

4. The display control apparatus of claim 3, wherein the user interface further comprises an interrupt control to interrupt the processor to output the display instruction to freeze the display page.

5. The display control apparatus of claim 1, wherein the motion parameter is related to a inclination of the electronic device.

6. The display control apparatus of claim 1, wherein the electronic device is a portable device.

7. A display control apparatus installed in an electronic device for adjusting a display page, the apparatus comprising:
a motion sensor for detecting a first angle between the electronic device and a first axle and a second angle between the electronic device and a second axle, and sending a first motion parameter and a second motion parameter;
a processor for receiving the first motion parameter and the second motion parameter to determine a motion direction and a motion distance in a plane defined by the first axle and the second axle, and sending out a display instruction; and
a display controller for receiving the display instruction to move the display page to a specific position based on the motion direction and the motion distance.

8. A display control method for controlling a display page of an electronic device, the method comprising:
detecting a motion of the electronic device to send at least one motion parameter;
receiving the motion parameter to determine a motion direction and a motion distance of the display page and sending out a display instruction; and
receiving the display instruction to move the display page to a specific position based on the motion direction and the motion distance.

9. The method of claim 8, further comprising pre-defining the relationship between the motion parameter and the motion direction and the relationship between the motion parameter and the motion distance.

10. The method of claim 8, wherein the motion parameter is related to the inclination of the electronic device.
